# EUROPEAN PATENT APPLICATION

(11) **EP 4 629 361 A1**
(43) Date of publication of application: **08.10.2025**
(21) Application number: 23912999.2
(22) Date of filing: 28.12.2023
(51) Int. Cl.: H01M 10/04, H01M 10/0562

(54) **BIPOLAR BATTERY AND MANUFACTURING METHOD THEREFOR**

(30) Priority: 30.12.2022 KR 20220190238
(71) Applicant: SK On Co., Ltd., Seoul 03161 (KR)
(72) Inventor: LEE, Seok Hee, Daejeon 34124 (KR)
(74) Representative: Prüfer & Partner mbB Patentanwälte · Rechtsanwälte
(86) International application number: PCT/KR2023/021909
(87) International publication number: WO 2024/144325

(57) **Abstract**

A bipolar battery according to an embodiment of the present disclosure comprises: a plurality of unit cells in which a solid electrolyte and one or more bipolar electrodes are interposed between a first electrode and a second electrode; and frames positioned between the unit cells so as to separate each of the unit cells, wherein the unit cells can be connected to each other in parallel.

## Description

### [Field]

Embodiments of the present disclosure relate to a bipolar battery and a manufacturing method therefor.

### [Background Art]

The rapid proliferation of information-related devices, such as personal computers, video cameras, and mobile phones, as well as communication devices, has led to an increased focus on the development of batteries used as their power sources. Additionally, in industries such as the automotive sector, research and development are underway for high-power, high-capacity batteries for electric vehicles and hybrid vehicles.

Currently available lithium-ion batteries use electrolyte solutions containing flammable organic solvents, which necessitates the installation of safety devices to suppress temperature rises during short circuits or structural and material improvements to prevent short circuits. In contrast, lithium batteries that are converted into solid-state by replacing electrolyte solutions with solid electrolyte layers do not use flammable organic solvents within the batteries, thereby simplifying safety devices. Thus, the lithium batteries are considered to be superior in terms of manufacturing costs and productivity.

### [Disclosure]

### [Technical Problem]

Embodiments of the present disclosure provide a bipolar battery with improved output voltage and energy density, and a manufacturing method therefor.

### [Technical Solution]

A bipolar battery according to one embodiment of the present disclosure may include a plurality of unit cells each including a solid electrolyte and one or more bipolar electrodes interposed between a first electrode and a second electrode; and a frame positioned between the unit cells and separating the unit cells from each other, in which the unit cells are connected in parallel.

A manufacturing method for a bipolar battery according to one embodiment of the present disclosure may include separating different unit cells by placing a frame between a plurality of unit cells; connecting the different unit cells in parallel, in which each of the unit cells connected in parallel comprises: a first electrode; a second electrode; one or more bipolar electrodes interposed between the first electrode and the second electrode; and a solid electrolyte interposed between the first electrode and the second electrode.

### [Advantageous Effects]

According to embodiments of the present disclosure, a bipolar battery with improved output voltage and energy density and a manufacturing method therefor may be provided.

### [Description of Drawings]

FIG. 1 is a diagram illustrating a unit cell of a bipolar battery according to one embodiment of the present disclosure.
FIG. 2 is a diagram illustrating a unit cell of a bipolar battery according to another embodiment of the present disclosure.
FIG. 3 is a diagram illustrating a bipolar battery according to one embodiment of the present disclosure.
FIG. 4 is a plan view illustrating a bipolar battery according to one embodiment of the present disclosure.
FIG. 5 is a plan view illustrating a bipolar battery according to another embodiment of the present disclosure.
FIG. 6 is a plan view illustrating extension of a bipolar battery according to one embodiment of the present disclosure.
FIG. 7 is a plan view illustrating extension of a bipolar battery according to another embodiment of the present disclosure.
FIG. 8 is a diagram illustrating a bipolar battery according to another embodiment of the present disclosure.
FIG. 9 is a flowchart illustrating a method of manufacturing a bipolar battery according to one embodiment of the present disclosure.
FIG. 10 is a flowchart illustrating one example of step S200 of FIG. 9 of the present disclosure.
FIG. 11 is a flowchart illustrating another example of step S200 of FIG. 9 of the present disclosure.

### [Modes of the Invention]

Structural or functional descriptions of embodiments which are disclosed in this specification or application are illustrated only to describe the embodiments in accordance with the technical spirit of the invention, and the embodiments in accordance with the technical spirit may be carried out by various forms but the descriptions are not limited to the embodiments described in this specification or application.

Hereinafter, unless otherwise defined herein, in case that a part of a layer, a film, a thin film, a region, or a plate is disposed "on" another part, the part may be not only "directly on" another part but still another part may intervene between them.

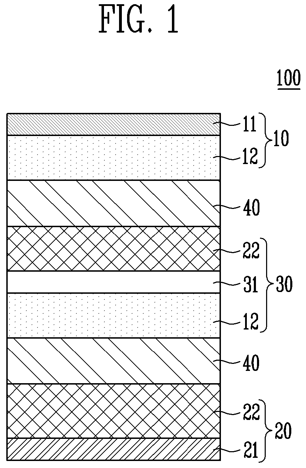

FIG. 1 is a diagram illustrating a unit cell of a bipolar battery according to one embodiment of the present disclosure.

Referring to FIG. 1, a unit cell 100 of a bipolar battery may include a first electrode 10, a second electrode 20, a bipolar electrode 30, and a solid electrolyte layer 40.

The first electrode 10 may include a first current collector 11 and a first active material layer 12.

Any material which has conductivity and forms the first active material layer 12 on one surface thereof may be used as the first current collector 11 without being particularly limited. For example, the first current collector 11 may include one or more materials selected from the group consisting of stainless steel, aluminum, copper, and nickel. The first current collector 11 may also be in the form of the above-described stainless steel, aluminum, copper, nickel, or the like which is coated with carbon on the surface thereof.

The thickness of the first current collector 11 may be selected appropriately depending on the application of the bipolar battery, but may typically be in the range of 1 *µ*m to 100 *µ*m and more specifically may be in the range of 5 *µ*m to 50 *µ*m. When the first current collector 11 has a small thickness, the occurrence of a short circuit due to breakage may be further prevented. Furthermore, the shape of the first current collector 11 may be selected appropriately depending on the application of the bipolar battery. In one embodiment, the first current collector 11 may be a cathode current collector.

The first active material layer 12 may be formed on one surface of the first current collector 11. In one embodiment, the first active material layer 12 may be a cathode active material layer. In this case, the first active material layer 12 may include a cathode active material. In the case of a bipolar lithium battery, the cathode active material may be a lithium oxide, for example, LiNixCoyMnzO2, LiNixCoyAlzO2 (0<x<1, 0<y<1, 0<z<1, and x+y+z =1), and the like. In one embodiment, the lithium oxide may be, but is not limited to, LiCoO₂, LiMnO₂, Li2NiMn₃O₈, LiVO₂, LiCrO₂, LiFePO₄, LiCoPO₄, LiNiO₂, LiNi_{1/3}Co_{1/3}Mn_{1/3}O₂, and the like. Furthermore, the cathode active material may be in a single crystalline or polycrystalline form.

In addition, the first active material layer 12 may further include one or more components selected from the group consisting of conductive materials, solid electrolytes, and binders. Conductive materials are used to enhance conductivity, such as acetylene black, Ketjen black, carbon fibers, graphene, and carbon nanotubes. The solid electrolyte is used to enhance the ionic conductivity of the cathode active material layer and may include the same materials described in the subsequent description of the solid electrolyte layer 40. In addition, the binder mediates the bonding between the cathode current collector and the cathode active material layer, thereby enhancing mechanical stability. Examples of the binder include fluorine-containing binders, such as polytetrafluoroethylene (PTFE) and fluorinated polyvinylidene (PVDF), or rubber-based binders such as nitrile butadiene rubber (NBR) and styrene-butadiene rubber (SBR).

A method of forming the first active layer 12 may be, but is not particularly limited to, any method of forming the first active layer 12 having a desired thickness on a desired area of the surface of the first current collector 11. For example, a method of forming the first active layer 12 by pressurizing and pressing the material of the first active layer 12, or a method of forming the first active layer 12 by preparing a slurry containing the material of the first active layer 12 and a solvent, and applying the slurry to the surface of the first current collector 11. Alternatively, in another embodiment, a method of forming the first active material layer 12 on the solid electrolyte layer 40 located under the first active material layer 12 first in the unit cell 100, and then arranging the first current collector 11 on the first active material layer 12 may also be considered.

The second electrode 20 may include a second current collector 21 and a second active material layer 22.

Any material which has conductivity and forms the second active material layer 22 on one surface thereof may be used as the second current collector 21. For example, the second current collector 21 may include one or more materials selected from the group consisting of stainless steel, aluminum, copper, and nickel. The second current collector 21 may also be in the form of the above-described stainless steel, aluminum, copper, nickel, or the like coated with carbon on the surface thereof.

The thickness of the second current collector 21 may be selected appropriately depending on the application of the bipolar battery, but may typically be in the range of 1 *µ*m to 100 *µ*m and more specifically may be in the range of 5 *µ*m to 50 *µ*m. When the second current collector 21 has a small thickness, the occurrence of a short circuit due to breakage may be further prevented. Furthermore, the shape of the second current collector 21 may be selected appropriately depending on the application of the bipolar battery. In one embodiment, the second current collector 21 may be an anode current collector.

The second active material layer 22 may be formed on one surface of the second current collector 21. In one embodiment, the second active material layer 22 may be an anode active material layer. In this case, the second active material layer 22 may include an anode active material. The anode active material may be, for example, but not limited to, a metal active material and a carbon active material. The anode active material may include at least one of the metal active material and the carbon active material. For example, the anode active material may include a metal active material or a carbon active material alone, or the anode active material may include a mixture of the metal active material and the carbon active material. The metals of the anode active material may be, for example, In, Al, Si, and Sn, and the carbon active material may be, for example, mesocarbon microbeads (MCMB), highly oriented graphite (HOPG), hard carbon, soft carbon, and the like, but are not limited thereto.

The anode active material may be composed of a silicon-based material. The silicon-based material may exhibit higher capacitance than a carbon-based material, resulting in a higher energy density per unit volume. The silicon-based material may include at least one selected from the group consisting of SiOx(0≤x<2), Si/C composites, and Si alloys, where x corresponds to the ratio of the number of O to the Si contained in SiOx(0≤x<2). The SiOx(0≤x<2) may have an average grain diameter (D50) of 4*µ*m to 9*µ*m or 5*µ*m to 7 *µ*m. When the above range is satisfied, the deterioration of the secondary battery life due to volume expansion of the silicon-based material may be prevented, and side reactions on the surface of the silicon-based material may be suppressed. The specific surface area of SiOx (0≤x<2) may be 4 m2/g to 9 m2/g, or 5 m2/g to 8 m2/g. When the above range is satisfied, the conductive network with the conductive material may be improved. The Si/C composite may be in the form where a carbon material is coated on the surface of the SiOx(0≤x<2) particles by firing while the carbon is bound to the SiOx(0≤x<2) particles, or in the form where the carbon is dispersed in an atomic state in the SiOx(0≤x<2) particles. The Si-alloy may be Si which is alloyed with one or more metals selected from the group consisting of Zn, Al, Mn, Ti, Fe, and Sn. The content of the silicon-based material may include from 1 wt% to 20 wt%, more specifically from 1 wt% to 10 wt%, based on the total solids weight of the anode composite layer. When the above range is satisfied, the energy density of the secondary battery may be improved while the retention rate of the energy capacity may be improved.

**In** addition, the second active material layer 22 may further include one or more selected from the group consisting of a conductive material, a solid electrolyte, and a binder, as needed, in the same manner as the first active material layer 12. Further, the second active material layer 22 may be manufactured in the same manner as described for the first active material layer 12.

**In** embodiments, the polarities of the first electrode 10 and the second electrode 20 may be opposite to each other. In one embodiment, when the first electrode 10 is a cathode, as in the example described above, the second electrode 20 may be an anode. In another embodiment, when the first electrode 10 is an anode, the second electrode 20 may be a cathode.

The bipolar electrode 30 may include a bipolar current collector 31, the first active material layer 12, and the second active material layer 22.

Any material which has conductivity and forms the first active material layer 12 on one surface thereof and the second active material layer 22 on the other side thereof may be used as the bipolar current collector 31. For example, the bipolar current collector 31 may include at least one material selected from the group consisting of stainless steel, aluminum, copper, and nickel. In another embodiment, the bipolar current collector 31 may be two or more materials, which are bounded to each other, selected from the group consisting of stainless steel, aluminum, copper, and nickel. The descriptions made previously for both the first collector 11 and the second collector 21 are applicable to the bipolar current collector 31, and will not be repeated.

The first active material layer 12 may be formed on one surface of the bipolar current collector 31 and the second active material layer 22 may be formed on the other side of the bipolar current collector 31, which is not repeatedly described as this has been described in the foregoing description regarding the first electrode 10 and the second electrode 20.

In one embodiment, the first active material layer 12 of the first electrode 10 and the first active material layer 12 of the bipolar electrode 30 may include the same material. In another embodiment, the first active material layer 12 of the first electrode 10 and the first active material layer 12 of the bipolar electrode 30 may include different materials.

In one embodiment, the second active material layer 22 of the second electrode 20 and the second active material layer 22 of the bipolar electrode 30 may include the same material. In another embodiment, the second active material layer 22 of the second electrode 20 and the second active material layer 22 of the bipolar electrode 30 may include different materials.

The solid electrolyte layer 40 may include a solid electrolyte. The solid electrolyte layer 40 may be located between the first electrode 10 and the bipolar electrode 30, between the second electrode 20 and the bipolar electrode 30, or between the second electrode 20 and the bipolar electrode 30. In one embodiment, where the bipolar electrode 30 includes a plurality of bipolar electrodes, the solid electrolyte layer 40 may be located between adjacent bipolar electrodes among the plurality of bipolar electrodes 30. More specifically, the solid electrolyte layer 40 may be located between the first active material layer 12 and the second active material layer 22.

The solid electrolyte layer 40 may include a solid electrolyte. The solid electrolyte is not particularly limited as long as the solid electrolyte has ion conductivity. For example, when the bipolar battery is a bipolar lithium battery, the solid electrolyte may include oxide amorphous solid electrolyte materials, such as Li₂O-B₂O₃-P₂O₅, Li₂O-SiO₂, Li₂O-B₂O₃, and Li₂O-B₂O₃-ZnO, sulfide amorphous solid electrolyte materials, such as Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, Li₃PO₄-Li₂S-SiS, LiI-Li₂S-P₂O₅, LiI-Li₃PO₄-P₂S₅, and Li₂S-P₂S₅, LPSCI or LGPS-based sulfide crystalline solid electrolyte materials, such as Li₃PS₅Cl, crystalline oxides·oxynitrides, such as LiI, LiI-Al₂O₃, Li₃N, Li₃N-LiI-LiOH, Li_{1 +x}AlxTi₂₋ₓ(PO₄)₃ (0≤x≤2), Li_{1 +x+ y}AₓTi₂₋ₓSi_{y}P_{3-y}O₁₂ (A = Al or Ga, 0≤x≤0.4, 0 < y≤0.6), [(A_{1/2}Li_{1/2})₁₋ₓBₓ]TiO₃ (A = La, Pr, Nd, Sm, B = Sr or Ba, 0≤x≤0.5), Li₅La₃Ta₂O₁₂, Li₇La₃Zr₂O₁₂, Li₆BaLa₂Ta₂O₁₂, Li₃PO_{(4-3/2x)}Nₓ (x < 1), and Li_{3.6}Si_{0.6}P_{0.4}O₄, or halide solid electrolyte materials, such as Li₃YCl₆, and Li₆PS₅Cl_{0.5}Br_{0.5}.

In another embodiment, the solid electrolyte may be a polymeric electrolyte, more specifically a polymeric gel electrolyte. Depending on a method of preparation, the polymeric electrolyte may be physical gel prepared by swelling an electrolyte after preparing a polymer matrix, or chemical gel prepared by curing a mixture of an electrolyte and a monomer. A polymeric gel electrolyte includes an organic electrolyte containing lithium salts and a polymer resin, with the organic electrolyte including 60 to 1000 parts by weight relative to 100 parts by weight of the polymer resin. Polymers applied in the polymeric gel electrolyte are not limited to specific components, but may include, for example, a polyether-based polymer, a PVC-based polymer, a PMMA-based polymer, polyacrylonitrile (PAN), polyvinylidene fluoride (PVdF), poly(vinylidene fluoride-hexafluoropropylene) (PVdF-HFP), polyacrylate, polyethylene oxide, or a mixture thereof.

Lithium salts contained in the polymeric gel electrolyte are ionizable lithium salts and may be expressed as Li+X-. The anions of these lithium salts are, for example, F⁻, Cl⁻, Br, I⁻, NO3⁻, N(CN)²⁻, BF⁴⁻, ClO⁴⁻, PF⁶⁻, (CF₃)₂PF⁴⁻, (CF₃)₃PF³⁻, (CF₃)₄PF²⁻, (CF₃)₅PF⁻, (CF₃)₆P⁻, CF₃SO³⁻, CF₃CF₂SO³⁻, (CF₃SO₂)₂N⁻, (FSO₂)₂N⁻,CF₃CF₂(CF₃)₂CO⁻, (CF₃SO₂)₂CH⁻, (SF₅)₃C⁻, (CF₃SO₂)₃C⁻, CF₃(CF₂)₇SO³⁻, CF₃CO²⁻, CH₃CO²⁻, SCN⁻, (CF₃CF₂SO₂)₂N⁻, etc., but are not limited thereto.

The solid electrolyte layer 40 may further include a binder in addition to the solid electrolyte. The same description about the binder which may be included in the first active material layer 12 as described above is also applicable to the binder of the solid electrolyte layer 40.

In one embodiment, the thickness of the solid electrolyte layer 40 may be in the range of 0.1 *µ*m to 1000 *µ*m, more specifically in the range of 0.1 *µ*m to 300 *µ*m, and even more specifically in the range of 0.1 *µ*m to 200 *µ*m.

The method of forming the solid electrolyte layer 40 is not particularly limited. Examples may include a method of forming the solid electrolyte layer 40 by pressurizing and pressing the material of the solid electrolyte layer 40, a method of forming the solid electrolyte layer 40 by preparing a slurry containing a material of the solid electrolyte layer 40 and a solvent, and coating the slurry on a current collector on which an electrode active material layer is formed, and a method of manufacturing a freestanding film by coating the slurry on the current collector and drying the slurry. In one embodiment, when the method of coating the slurry is used, the solid electrolyte layer 40 may be more easily formed by covering the electrode active layer. Here, the electrode active material layer may be the first active material layer 12 or the second active material layer 22, and the current collector may be the first current collector 11, the second current collector 21, or the bipolar current collector 31.

As shown in FIG. 1, the bipolar electrode 30 and the solid electrolyte layer 40 may be interposed between the first electrode 10 and the second electrode 20 in the unit cell 100. In one embodiment, one or more bipolar electrodes 30 may be positioned between the first electrode 10 and the second electrode 20, and a plurality of solid electrolyte layers 40 may be positioned.

In an embodiment, the unit cell 100 may be in the form of a stack of the first electrode 10, the second electrode 20, one or more bipolar electrodes 30, and the plurality of solid electrolyte layers 40. The first electrode 10 and the second electrode 20 may be located at both ends of the unit cell 100 in the stacking direction. More specifically, the first current collector 11 and the second current collector 21 may be located at both ends of the unit cell 100 in the stacking direction.

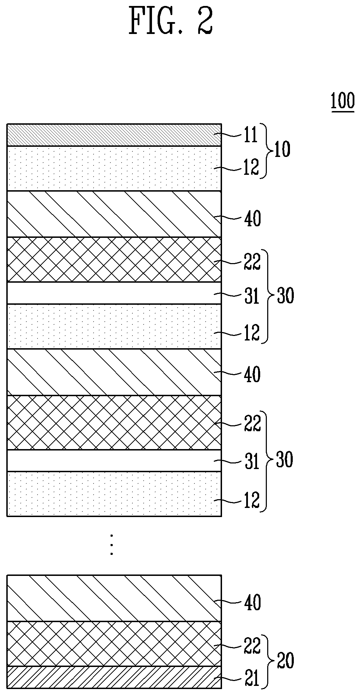

FIG. 2 is a diagram illustrating a unit cell of a bipolar battery according to another embodiment of the present disclosure.

Referring to FIG. 2, the unit cell 100 of the bipolar battery may include the plurality of bipolar electrodes 30. The solid electrolyte layer 40 may be positioned between the plurality of bipolar electrodes 30.

In one embodiment, the first active material layers 12 of the plurality of bipolar electrodes 30 may include the same material. In another embodiment, the first active material layers 12 of at least some of the plurality of bipolar electrodes 30 may include different materials.

In one embodiment, the second active material layers 22 of the plurality of bipolar electrodes 30 may include the same material. In another embodiment, the second active material layers 22 of at least some of the plurality of bipolar electrodes 30 may include different materials.

By repeatedly arranging the bipolar electrodes 30 in each of which the first active material layer 12, the bipolar current collector 31, and the second active material layer 22 are stacked, the unit cell 100 may include a plurality of bipolar battery cells connected in series.

By including the plurality of bipolar electrodes 30, as shown in FIG. 2, the output voltage of the entire bipolar battery may be increased.

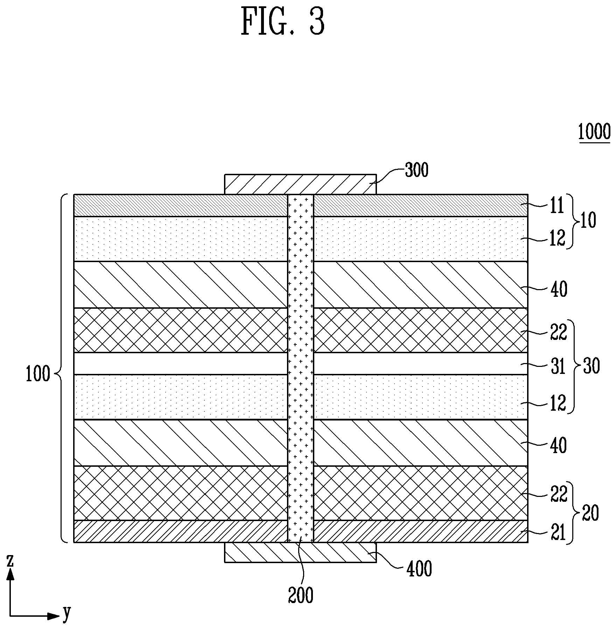

FIG. 3 is a diagram illustrating a bipolar battery according to one embodiment of the present disclosure.

Referring to FIG. 3, a bipolar battery 1000 may include a plurality of unit cells 100. The unit cells 100 may be the unit cells 100 as described with reference to FIGS. 1 and 2. The unit cells 100 may be disposed adjacent to each other in a direction which is different from the direction in which the first electrode 10, the second electrode 20, the bipolar electrode 30, and the solid electrolyte layer 40 are stacked. In one embodiment, the unit cells 100 may be disposed adjacent to each other in a direction perpendicular to the direction in which the first electrode 10, the second electrode 20, and the bipolar electrode 30 are stacked. Hereinafter, the direction in which the first electrode 10, the second electrode 20, the bipolar electrode 30, and the solid electrolyte layer 40 of the unit cell 100 are stacked may be defined as a z-axis direction, the direction in which the unit cells 100 are adjacent to each other may be defined as a y-axis direction, and the direction perpendicular to both the z-axis direction and the y-axis direction may be defined as an x-axis direction.

A frame 200 may be positioned between the plurality of unit cells 100. The frame 200 may include an insulating material. Accordingly, the frame 200 may electrically isolate the unit cells 100. In one embodiment, the frame 200 may extend in the z-axis direction of each of the unit cells 100. More specifically, the frame 200 may separate the unit cells 100 disposed between the first current collector 11 and the second current collector 21 in the y-axis direction.

The frame 200 may include an elastic material. In one embodiment, pressure may be applied from an external source during an operation of the bipolar battery 1000, and the frame 200 including a resilient material may be appropriately compressed by the pressure from the external source to allow the plurality of unit cells 100 to be separated normally and undamaged despite the external pressure.

The frame 200 may include, but is not limited to, one or more materials selected from the group consisting of polyurethane, natural rubber, spandex, isobutylene Isoprene rubber (IIR), fluoroelastomer, elastomer, ethylene-propylene rubber (EPR), styrene-butadiene rubber (SBR), chloroprene, elastin, rubber epichlorohydrin, nylon, terpene, isoprene rubber, polybutadiene, nitrile rubber, thermoplastic elastomers, silicone rubber, ethylene-propylene-diene rubber (EPDM), ethylene vinyl acetate (EVA), halogenated butyl rubber, neoprene, and copolymers thereof. Alternatively, in another embodiment, the frame 200 may be a nonwoven or porous material. For example, the frame 200 may be a nonwoven fabric or sheet including one or more materials selected from the group consisting of olefin-based porous materials, fiberglass, and polyethylene.

The first current collectors 11 of the plurality of unit cells 100 may be connected to each other by a first conductive line 300. Further, the second current collectors 21 of the plurality of unit cells 100 may be connected to each other by a second conductive line 400. The first conductive line 300 and the second conductive line 400 may include any conductive lines capable of electrically connecting the first current collectors 11 and the second current collectors 21, respectively.

The first current collectors 11 connected by the first conductive line 300 may have the same polarity as each other. In other words, when the first current collector 11 of one unit cell 100 in FIG. 3 is a cathode current collector, the first current collector 11 of another unit cell 100 may also be a cathode current collector. Conversely, when the first current collector 11 of one unit cell 100 in FIG. 3 is an anode current collector, the first current collector 11 of another unit cell 100 may also be an anode current collector.

Furthermore, the second current collectors 21 connected by the second conductive line 400 may have the same polarity as each other. In other words, when the second current collector 21 of one unit cell 100 in FIG. 3 is an anode current collector, the second current collector 21 of another unit cell 100 may also be an anode current collector. Conversely, when the second current collector 21 of one unit cell 100 in FIG. 3 is a cathode current collector, the second current collector 21 of another unit cell 100 may also be a cathode current collector.

That is, by the first conductive line 300 and the second conductive line 400, different unit cells 100 may be connected in parallel. Accordingly, the capacity of the bipolar battery 1000 may be improved.

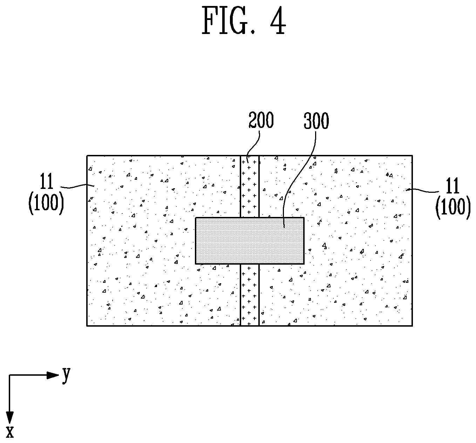

FIG. 4 is a plan view illustrating a bipolar battery according to one embodiment of the present disclosure.

FIG. 4 is a cross-sectional view of the bipolar battery 1000 of FIG. 3 when viewed from the top in the z-axis direction, i.e., where the first current collector 11 is located.

Referring to FIG. 4, each of neighboring unit cells 100 may be separated by the frame 200. The first current collector 11 of each of the neighboring unit cells 100 may be connected by the first conductive line 300.

The unit cells 100 may be arranged to be adjacent in the y-axis direction, and the unit cells 100 may be connected in parallel.

In FIG. 4, the first conductive line 300 is shown as being located in the center of each of the first current collectors 11 in the x-axis direction. However, the first conductive line 300 may be located anywhere which may connect the first current collectors 11 of each of the adjacent unit cells 100.

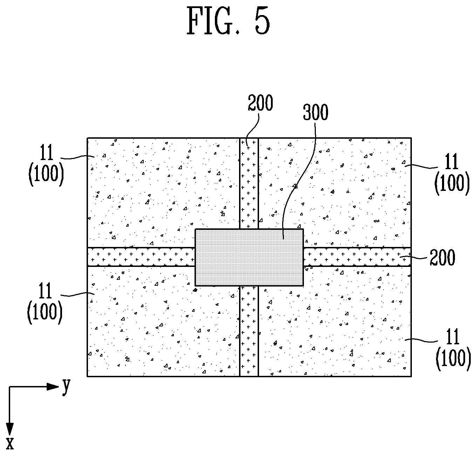

FIG. 5 is a plan view illustrating a bipolar battery according to another embodiment of the present disclosure.

Referring to FIG. 5, the unit cells 100 adjacent in both the x-axis direction and the y-axis direction may be arranged and be connected in parallel.

In this case, as shown in FIG. 5, the first conductive line 300 may be located at an end of each of the first current collectors 11 in the x-axis direction, but is not limited thereto. When the first conductive line 300 is located at the end of each of the first current collectors 11 in the x-axis direction, the required number of conductive lines may be reduced.

That is, when the first conductive line 300 is positioned at the center of each of the first current collectors 11 in the x-axis direction as shown in FIG. 4, a plurality of first conductive lines may be required if the unit cells adjacent in both the x-axis and y-axis directions are arranged as shown in FIG. 5. However, when the first conductive line 300 is positioned at the end of each of the first current collectors 11 in the x-axis direction as shown in FIG. 5, all four unit cells 100 may be connected to each other with only a single conductive line.

The frame 200 may be disposed between adjacent unit cells 100. The frames 200 each of which is disposed between adjacent unit cells 100 may be connected to each other. In one embodiment, the frames 200 disposed between different unit cells 100 may be bonded together to be connected to each other. In another embodiment, the frame 200 may be an integral component, and may extend in an extended x-axis direction and y-axis direction to be positioned between the different unit cells 100.

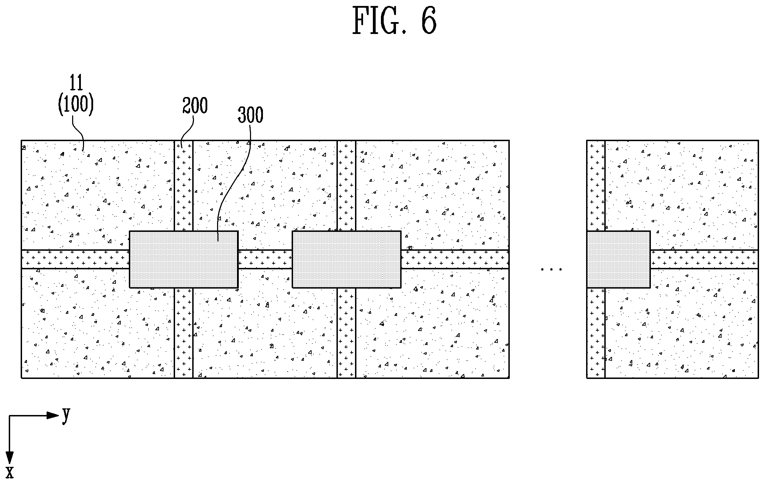

FIG. 6 is a plan view illustrating extension of a bipolar battery according to one embodiment of the present disclosure.

Referring to FIG. 6, two adjacent unit cells 100 in the x-axis direction may extend in the y-axis direction. Here, all of the unit cells 100 may each be adjacent to two or more unit cells 100, and each may be adjacent to three unit cells 100, except for the unit cells 100 located at the y-axis direction end.

The frame 200 may be positioned between adjacent unit cells 100. Further, the adjacent unit cells 100 may be connected in parallel through the first conductive line 300 and a second conductive line (not shown). Furthermore, in one embodiment, adjacent unit cells 100 may be connected through a plurality of first conductive lines 300 and/or a plurality of second conductive lines (not shown), and in another embodiment, adjacent unit cells 100 may be connected through a single first conductive line 300 and a single second conductive line.

By expanding the plurality of unit cells 100 as shown in FIG. 6, the capacity of the bipolar battery 1000 may be further improved, and by arranging the unit cells 100 as shown in FIG. 6, the energy density of the bipolar battery 1000 may be improved.

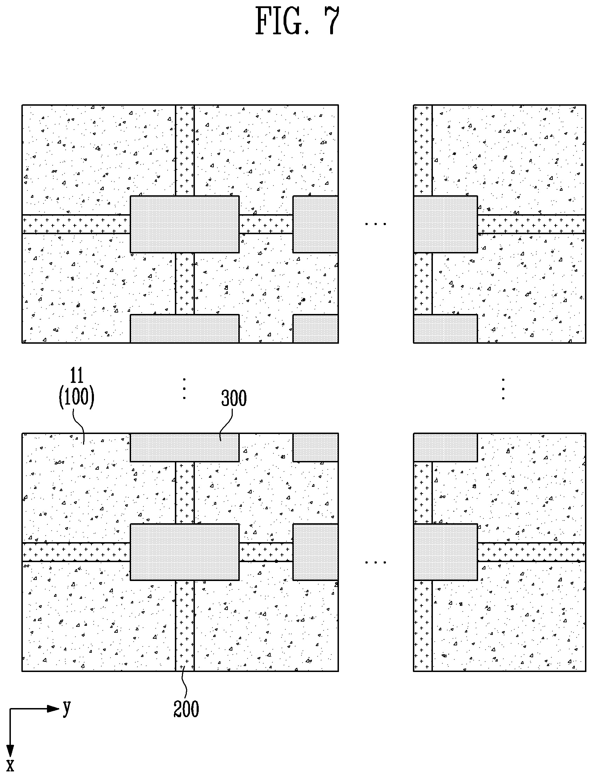

FIG. 7 is a plan view illustrating extension of the bipolar battery 1000 according to another embodiment of the present disclosure.

Referring to FIG. 7, two unit cells 100 adjacent in the x-axis direction may extend in both the x-axis direction and the y-axis direction. Here, all of the unit cells 100 may each be adjacent to two or more unit cells 100, and each may be adjacent to four unit cells 100, except for the unit cells 100 located at the x-axis directional end and the y-axis directional end.

The frame 200 may be positioned between adjacent unit cells 100. Further, the adjacent unit cells 100 may be connected in parallel through the first conductive line 300 and a second conductive line (not shown). Further, in one embodiment, adjacent unit cells 100 may be connected through a plurality of first conductive lines 300 and/or a plurality of second conductive lines (not shown), and in another embodiment, adjacent unit cells 100 may be connected through a single first conductive line 300 and a single second conductive line.

The capacity of the bipolar battery 1000 may be further improved by expanding the plurality of unit cells 100 as shown in FIG. 6, and the energy density of the bipolar battery 1000 may be improved by arranging the unit cells 100 as shown in FIG. 7.

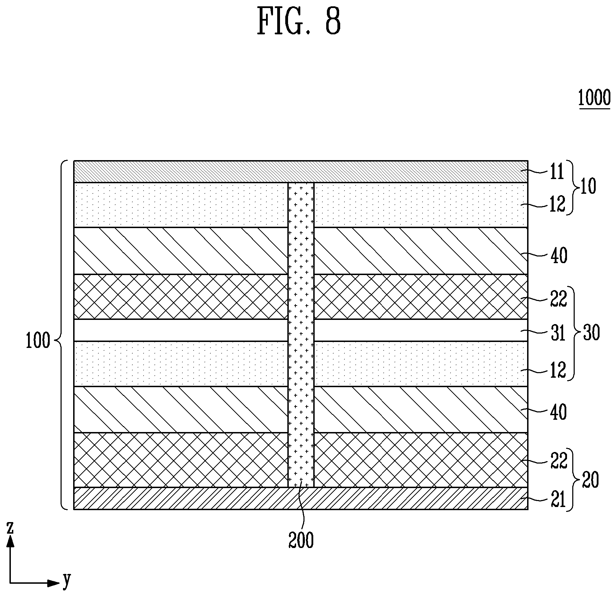

FIG. 8 is a diagram illustrating a bipolar battery according to another embodiment of the present disclosure.

Referring to FIG. 8, at least one selected from the group consisting of the first current collector 11 and the second current collector 21 of different unit cells 100 may be shared. In one embodiment, both the first current collector 11 and the second current collector 21 of different unit cells 100 may be shared. Accordingly, unlike in FIG. 3, a first conductive line and/or a second conductive line may not be provided to connect the first current collectors 11 and/or the second current collectors 21.

The frame 200 may electrically separate the unit cells 100. In one embodiment, where both the first current collector 11 and the second current collector 21 of different unit cells 100 are shared, the frame 200 may separate each of the unit cells 100 in the z-axis direction between the first active material layer 12 and the second active material layer 22.

Though not shown in FIG. 8, in one embodiment, where only the first current collector 11 of different unit cells 100 is shared, the frame 200 may separate of each of the unit cells 100 between the first active material layer 12 and the second current collector 21 in the z-axis direction.

Though not shown in FIG. 8, in one embodiment, where only the second current collector 21 of the different unit cells 100 is shared, the frame 200 may separate of each of the unit cells 100 in the z-axis direction between the first current collector 11 and the second active material layer 22.

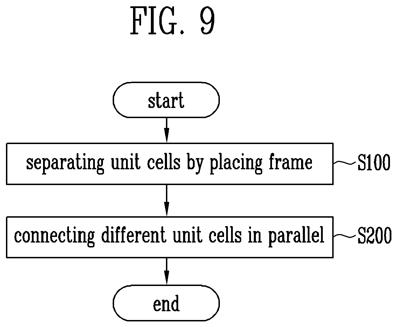

FIG. 9 is a flowchart illustrating a method of manufacturing a bipolar battery according to one embodiment of the present disclosure.

Referring to FIG. 9, in step S100, unit cells may be electrically separated by placing a frame between different unit cells. In one embodiment, the unit cells in step S100 may have the same structure as unit cells connected in parallel in step S200 to be described below. Alternatively, in another embodiment, the unit cells in step S 100 may have a configuration in which some components are not yet provided in the paralleled unit cells in step S200 to be described below. For example, a first current collector or a second current collector may not be provided.

Further, in step S200, different unit cells may be connected in parallel. The parallel connected unit cells may each include a first electrode, a second electrode, one or more bipolar electrodes, and a plurality of solid electrolyte layers. The one or more bipolar electrodes and the solid electrolyte layers may be interposed between the first and second electrodes. The descriptions made with reference to FIGS. 1 to 8 are applicable to the first electrode, the second electrode, the bipolar electrodes, and the solid electrolyte layers.

Different unit cells may be connected in parallel by performing processes of connecting the respective first electrodes to each other and connecting the respective second electrodes to each other. More specifically, the first current collectors of the first electrodes may be electrically connected to each other and the second current collectors of the second electrodes may be electrically connected to each other.

Further, although FIG. 9 shows that step S200 is performed after step S100, the present disclosure is not limited thereto, and step S200 may be performed first and then step S100 may be performed.

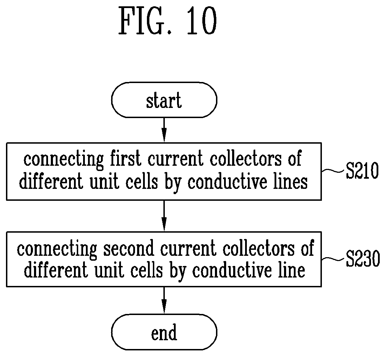

FIG. 10 is a flowchart illustrating one example of step S200 of FIG. 9 of the present disclosure.

FIG. 10 is an example of step S200 of FIG. 9 performed to manufacture a bipolar battery having the same structure as in FIG. 3.

Referring to FIG. 10, in step S210, first current collectors of different unit cells may be connected by first conductive lines. Further, in step S230, the second current collectors of the different unit cells may be connected by a second conductive line. In this case, each unit cell may include both first and second current collectors.

Although FIG. 10 shows that step S230 is performed after step S210, the present disclosure is not limited thereto, and step S210 may be performed after step S230.

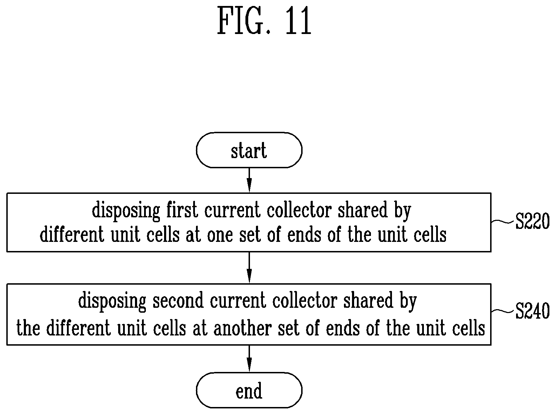

FIG. 11 is a flowchart illustrating another example of step S200 of FIG. 9 of the present disclosure.

FIG. 11 is an example of step S200 of FIG. 9 performed to manufacture a bipolar battery having the same structure as in FIG. 8.

Referring to FIG. 11, in step S220, a first current collector shared by different unit cells may be disposed at one set of ends of the unit cells. Further, in step S240, a second current collector shared by the different unit cells may be disposed at another set of ends of the unit cells.

At this point, each of the unit cells may not include the first and second current collectors, and the unit cells may be finalized by performing steps S220 and S240.

Although FIG. 11 shows that step S240 is performed after step S220, the present disclosure is not limited thereto, and step S220 may be performed after step S240.

### [Description of reference signs]

| | | | |
|---|---|---|---|
| 10: | First Electrode | 11: | First Current Collector |
| 12: | First Active Material Layer | 20: | Second Electrode |
| 21: | Second current Collector | 22: | Second Active Material Layer |
| 30: | Bipolar Electrode | 31: | Bipolar Current Collector |
| 40: | Solid Electrolyte Layer | 100 : | Unit Cell |
| 200 : | Frame | 300 : | First Conductive Line |
| 400 : | Second Conductive Line | 1000: | Bipolar Battery |

## Claims

1. A bipolar battery, comprising:
a plurality of unit cells each including a solid electrolyte and one or more bipolar electrodes interposed between a first electrode and a second electrode; and
a frame positioned between the unit cells and separating the unit cells from each other,
wherein the unit cells are connected in parallel.

2. The bipolar battery according to claim 1,
wherein first electrodes of the unit cells are electrically connected to each other, and
wherein second electrodes of the unit cells are electrically connected to each other.

3. The bipolar battery according to claim 1, wherein the first electrode comprises a first current collector and a first active material layer formed on one surface of the first current collector, and
wherein the second electrode comprises a second current collector and a second active material layer formed on one surface of the second current collector.

4. The bipolar battery according to claim 3, wherein each of the bipolar electrodes comprises a bipolar current collector, a first active material layer formed on one surface of the bipolar current collector, and a second active material layer formed on another surface of the bipolar current collector.

5. The bipolar battery according to claim 4, wherein a solid electrolyte layer comprising the solid electrolyte is located between the first electrode and the bipolar electrode, between the bipolar electrodes, and between the second electrode and the bipolar electrode.

6. The bipolar battery according to claim 3, wherein first current collectors of different unit cells are connected to each other by a first conductive line, and
wherein the second current collectors of the different unit cells are connected to each other by a second conductive line.

7. The bipolar battery according to claim 6, wherein the frame separates the different unit cells between the first current collector and the second current collector.

8. The bipolar battery according to claim 3, wherein at least a portion of the unit cells share at least one selected from the group consisting of the first current collector and the second current collector.

9. The bipolar battery according to claim 8, wherein at least a portion of the unit cells share the first current collector and the second current collector.

10. The bipolar battery according to claim 8, wherein the frame separates different unit cells between the first active material layer and the second active material layer.

11. The bipolar battery according to claim 1, wherein the frame comprises an insulating material.

12. The bipolar battery according to claim 11, wherein the frame comprises an elastic material.

13. The bipolar battery according to claim 12, wherein the frame comprises one or more materials selected from the group consisting of polyurethane, natural rubber, spandex, isobutylene Isoprene rubber (IIR), fluoroelastomer, elastomer, ethylene-propylene rubber (EPR), styrene-butadiene rubber (SBR), chloroprene, elastin, rubber epichlorohydrin, nylon, terpene, isoprene rubber, polybutadiene, nitrile rubber, thermoplastic elastomers, silicone rubber, ethylene-propylene-diene rubber (EPDM), ethylene vinyl acetate (EVA), halogenated butyl rubber, neoprene, and copolymers thereof.

14. The bipolar battery according to claim 1, wherein an arbitrary unit cell among the unit cells is adjacent to two or more unit cells.

15. A manufacturing method for a bipolar battery, the manufacturing method comprising:
separating different unit cells by placing a frame between a plurality of unit cells;
connecting the different unit cells in parallel,
wherein each of the unit cells connected in parallel comprises:
a first electrode;
a second electrode;
one or more bipolar electrodes interposed between the first electrode and the second electrode; and
a solid electrolyte interposed between the first electrode and the second electrode.

16. The manufacturing method of claim 15, wherein the connecting of the different unit cells in parallel comprises:
electrically connecting first electrodes of the different unit cells to each other; and
electrically connecting the second electrodes of the different unit cells to each other.
